# EUROPÄISCHE PATENTSCHRIFT

(11) **EP 2 366 580 B1**
(45) Veröffentlichungstag und Bekanntmachung des Hinweises auf die Patenterteilung: **27.05.2020**
(21) Anmeldenummer: 11154183.5
(22) Anmeldetag: 11.02.2011
(51) Int. Cl.: B60L 50/50

(54) **Verfahren zum ortsunabhängigen Strombezug und/oder zur ortsunabhängigen Stromeinspeisung einer mobilen Speicher- und Verbrauchseinheit an einer ortsfesten Stromtankstelle eines beliebigen Betreibers**
Method for location-independent electricity use and/or location-independent electricity feed-in of a mobile storage and consumption unit of a fixed electricity charging station belonging to any operator
Procédé de ravitaillement et/ou de réinjection en courant indépendamment du lieu d'une unité d'accumulation et/ou de consommation mobile vers une station électrique fixe d'un fournisseur quelconque

(30) Priorität: 26.02.2010 DE 102010009583
(43) Veröffentlichungstag der Anmeldung: 21.09.2011
(73) Patentinhaber: EnBW Energie Baden-Württemberg AG, 76131 Karlsruhe (DE)
(72) Erfinder: Walch, Lars, 76307 Karlsbad (DE); Stiller, Hartmut, 42349 Wuppertal (DE)
(74) Vertreter: Durm Patentanwälte PartG mbB

(56) Entgegenhaltungen:
- DE-U1-202008 014 768
- US-A1- 2009 210 357
- US-A1- 2009 313 103

## Beschreibung

Die Erfindung betrifft ein Verfahren zum ortsunabhängigen Strombezug und/oder zur ortsunabhängigen Stromeinspeisung einer mobilen Speicher- und Verbrauchseinheit an einer ortsfesten Stromtankstelle eines beliebigen Stationsbetreibers, wobei eine Vielzahl von Stromtankstellen über Stromleitungen mindestens eines Stromverteilnetzbetreibers mit Strom von einem Stationslieferanten versorgt werden.

Zur Abdeckung des wachsenden Energiebedarfs von elektrisch angetriebenen Fahrzeugen werden u.a. öffentlich zugängliche kostenpflichtige oder kostenlose Stromtankstellen genutzt. Derartige Stromtankstellen stellen dabei die für das Aufladen eines Akkumulators eines Elektrofahrzeugs notwendige elektrische Energie bereit. So beschreibt die US-A 4,052,655 A1 eine Stromladeanlage mit mehreren jeweils autark arbeitenden Zapfsäulen, die jeweils mit mindestens einer Steckdose zum Anstecken eines Ladekabels und einer diesem zugeordneten mechanischen Sicherung versehen sind und denen jeweils eine Energiemengenzähleinrichtung und den Strompreis ermittelnde Recheneinrichtung zugeordnet sind. Die Bezahlung erfolgt dabei durch Münzeinwurf, was eine aufwändige Diebstahlsicherung erforderlich macht und einen hohen Wartungs- und Überwachungsaufwand bedingt.

Das Aufladen von Automobilen an jeweils autark arbeitenden, an das Stromnetz angeschlossenen Parkuhren während der Parkzeit ist aus der DE 41 01 053 A1 bekannt, bei der die abgenommene Strommenge durch Geldmünzen oder mit einer Scheckkarte gezahlt wird. Auch die DE 295 05 733 U1 beschreibt ein Ladesystem für Elektroautos mit einem Scheckkarten- oder Münzautomaten. Dabei stellt sich das Problem, dass diverse Manipulationsmöglichkeiten bestehen.

Auch die DE 42 13 414 C2 beschreibt eine Stromladeanlage mit mehreren Stromzapfsäulen, die jeweils mit wenigstens einer Steckdose zum Anstecken eines Ladekabels und mit einer diesem zugeordneten mechanischen Sicherung versehen sind und denen jeweils eine Energiemengenzähleinrichtung und eine den Strompreis ermittelnde Recheneinrichtung zugeordnet sind, wobei ein zentraler Terminal vorgesehen ist, der die mit den Energiemengenzähleinrichtungen aller Stromzapfsäulen signalleitungsverknüpften Recheneinrichtungen enthält und mit den betriebsnotwendigen Komponenten aller Stromzapfsäulen signalleitungsverknüpft ist. Weiterhin ist zwischen dem Terminal und jeder Stromzapfsäule jeweils eine dieser zugeordneten Interfaceeinrichtungen eingeschaltet, die eine den Betriebszustand einer mechanischen Sicherung kontrollierende Sicherungseinrichtung, eine bei Funktionsstörungen ansprechende Sicherungseinrichtung und eine Fehlerströme überwachende Sicherungseinrichtung enthält. Bei dieser Stromtankstelle enthält die Kontrolleinrichtung insbesondere eine Magnetkarten-Leseeinrichtung für Identifikationskarten. Auch eine derartige Vorrichtung muss sehr komplex aufgebaut sein und kann eine missbräuchliche Benutzung nicht verhindern.

Mit steigender Anzahl von Elektrofahrzeugen in den Innenstädten ergibt sich die Problematik, dass eine große Anzahl unterschiedlicher Benutzer eine Stromtankstelle beanspruchen. Es sollte jedoch möglichst eine benutzergerechte Abrechnung erfolgen, da im Gegensatz zu betriebsinternen Stromparkplätzen die Abrechnung nicht von einem einzigen Betreiber beglichen werden muss. So ist insbesondere die Möglichkeit nicht auszuschließen, dass einzelne Energieverbraucher bemüht sind, die gelieferte Energiemenge nicht selbst zu bezahlen. Vor diesem Hintergrund beschreibt die DE 44 14 008 C2 eine Anordnung zur Abgabe von elektrischer Energie an Kraftfahrzeuge mit einem Anschluss an eine elektrische Energieversorgung, einer Kommunikationseinheit, welche eine Eingabevorrichtung zur Bestätigung durch den Benutzer aufweist sowie eine Ausgabevorrichtung für Informationen an den Benutzer, einer Freigabeschaltung, die in Abhängigkeit von der Eingabe des Benutzers die Energieabgabe freischaltet, wobei erst nach einem Abgleich von Informationen aus der Eingabevorrichtung mit Informationen, die als Identifizierungsdaten vom Kraftfahrzeug zu der Freigabeschaltung übertragen werden, eine Freigabe der Energieabgabe erfolgt. Dabei wird insbesondere ein Kartenlesegerät benutzt, wobei eine diesem zugeordnete Karte Angaben über den Benutzer und über das Kraftfahrzeug enthalt. Auch eine solche Vorrichtung ist mindestens mit einem Kartenlesegerat ausgestattet, sodass ein Missbrauch beim Strombezug nicht ausgeschlossen werden kann. Weiterhin ermöglicht diese bekannte Vorrichtung auch keine wirkliche benutzerspezifische Abrechnung für Kunden anderer Stromlieferanten, die Strom an einer ortsfesten Stromtankstelle eines fremden Betreibers beziehen oder rückspeisen wollen.

Die DE 10 2008 014 768 U1 betrifft eine Steuervorrichtung für eine Stromtankstelle zum Strombezug und/oder zur Stromeinspeisung einer mobilen Speicher- und Verbrauchseinheit. Die Steuervorrichtung enthält mindestens folgende Komponente: Ein zentrales Steuergerät, einen Aktor zur Betätigung eines Schalters, um den Ladevorgang und/oder den Einspeisevorgang zu starten und zu stoppen, ein Kommunikationsmodul zur Aufbereitung von Daten aus dem Steuergerät für die Kommunikation mit der mobilen Speicher- und Verbrauchseinheit und/oder mit einem Datenmanagementsystem sowie zur Umwandlung von eintreffenden Signalen in für das Steuergerät verarbeitbare Daten, eine Messeinrichtung zur Messung der durchfließenden elektrischen Energie bei der Aufladung der mobilen Speicher- und Verbrauchseinheit oder bei Einspeisen in die Stromtankstelle, ein Verschlüsselungsmodul zur Verschlüsselung der vom Steuergerät erzeugten Daten und ein mit der Messeinrichtung verbundenes Mittel zur Signierung.

Die US 2009/0210357 A1 betrifft ein Verfahren zum ferngesteuerten Verbrauchsmanagement von Plug-in-Fahrzeugen. Es werden Verfahren und Systeme zum Steuern des Ladens von Energiespeichersystemen in einer Vielzahl von Plug-in-Fahrzeugen unter Verwendung einer Fernsteuerzentrale bereitgestellt. Es wird ein System zum Steuern des Ladens einer Vielzahl von entfernt angeordneten Plug-in-Fahrzeugen bereitgestellt. Das System umfasst ein Kommunikationssystem, das zum Senden von Ladeberechtigungen zum Laden der Fahrzeuge und zum Empfangen von Daten in Bezug auf den Energieverbrauch von jedem der Fahrzeuge konfiguriert ist. Das System umfasst auch eine Steuerung, die mit dem Kommunikationssystem gekoppelt und konfiguriert ist, um die Daten in Bezug auf den Energieverbrauch zu empfangen und die darauf basierenden Ladeberechtigungen zu steuern. Eine Datenbank ist ebenfalls im System enthalten und kommuniziert mit der Steuerung, wobei die Datenbank zum Speichern der Daten in Bezug auf den Stromverbrauch ausgebildet ist.

Die US 2009/0313103 A1 betrifft ein Verfahren, eine Vorrichtung und ein Computerprogrammprodukt zum Verwalten einer Ladetransaktion für ein Elektrofahrzeug. Zunächst werden Vorgaben für die Aufladetransaktion identifiziert. Ladeinformationen werden aus einer Reihe von Quellen abgerufen. Aus den Ladeinformationen des Elektrofahrzeugs wird ein Energietransaktionsplan erstellt. Für ein mit der Ladestation verbundenes Elektrofahrzeug wird gemäß dem Energietransaktionsplan eine Ladephase der Elektrofahrzeugladetransaktion eingeleitet. Die Ladephase umfasst das Laden des Elektrofahrzeugs oder das Speichern von Elektrizität in einem elektrischen Speichermechanismus, der dem Elektrofahrzeug zugeordnet ist, sowie das Entfernen von Elektrizität aus dem Speichermechanismus, um das Elektrofahrzeug zu entladen. In Reaktion auf den Abschluss der Ladephase werden die finanziellen Verpflichtungen eines Auftraggebers gemäß dem Energietransaktionsplan abgerechnet.

Der vorliegenden Erfindung liegt deshalb die Aufgabe zu Grunde, ein Verfahren zum ortsunabhängigen Strombezug und/oder zur ortsunabhängigen Stromeinspeisung einer mobilen Speicher- und Verbrauchseinheit bereitzustellen, welche einen überwachungslosen Betrieb, eine hohe Betriebs- und Funktionssicherheit sowie einen hohen Bedienungskomfort aufweist und insbesondere die missbräuchliche Benutzung verhindert. Weiterhin soll es für Kunden anderer Stromlieferanten, wie beispielsweise aus dem Ausland, möglich sein, an einer ortsfesten Stromtankstelle eines beliebigen Betreibers Strom zu beziehen oder einzuspeisen. Hierbei soll möglichst einer Vielzahl von Kunden anderer Stromlieferanten die Benutzung der Stromtankstellen ermöglicht werden.
- Diese der Erfindung zugrunde liegende Aufgabe wird gelöst durch ein Verfahren nach Anspruch 1, eine ortsfeste Stromtankstelle nach Anspruch 11 sowie ein System nach Anspruch 12.

Das Verfahren ermöglicht es einem Nutzer der mobilen Speicher- und Verbrauchseinheit an einer beliebigen Stromtankstelle mit hohem Bedienungskomfort elektrische Energie zu beziehen oder in ein Stromnetz einzuspeisen, wobei sofort eine wunschgemäße Abrechnung über einen ausgewählten Stromlieferanten erfolgen kann. Ein derartiger Strombezug bzw. eine derartige Stromeinspeisung bietet damit ähnlich gestaltete Nutzungsmöglichkeiten, wie sie bisher lediglich von festen Heimanschlüssen bekannt waren.

Das erfindungsgemäße Verfahren erlaubt zusätzlich die Nutzung einer ortsfesten Stromtankstelle eines fremden Betreibers, bei welchem die mobile Speicher- und/oder Verbrauchseinheit nicht registriert ist. Somit ist es erstmals möglich, dass auch Kunden aus dem angrenzenden Ausland an einer solchen Stromtankstelle Strom beziehen oder einspeisen können, wobei die Abrechnung trotzdem über ihren eigentlichen Stromanbieter (Kundenlieferant) abgerechnet wird. Das Roaming-Abkommen zwischen Stationsbetreiber und einer Vielzahl von Kundenlieferanten ermöglicht eine breite Abdeckung von unterschiedlichen Kundenlieferanten, dessen Kunden eine solche Stromtankstelle benutzen können. Ein weiterer Vorteil des erfindungsgemäßen Verfahrens ist, dass die Durchführung des Verfahrens im bestehenden regulatorischen Umfeld möglich ist. Somit muss keine Umstellung der Stromnetze erfolgen.

In einer alternativen Ausgestaltung betreibt der Stationslieferant zugleich die Stromtankstellen, und/oder es erfolgt eine direkte Kommunikation zwischen dem Stationslieferanten und dem Kundenlieferanten, wobei zwischen Stationslieferant und Kundenlieferant ein Roaming-Abkommen besteht. In einer solchen Konstellation kann eine Freischaltung der Stromtankstelle durch den Stationsbetreiber erfolgen. Der Abrechnungsserver ist aus diesem Grunde einem Stationsbetreiber zugeordnet.

In einer vorteilhaften Ausgestaltungsform der Erfindung wird der Transfer der Roaming-Daten von Clearing-Häusern realisiert, welche vorzugsweise zusätzlich für die Überprüfung der Datenkonsistenz, Überprüfung und Koordination der Tarife, Zuordnung der Speicher- und Verbrauchseinheit zu einem Kundenlieferanten, Freischaltung der Stromtankstelle und Rechnungsabwicklung verantwortlich sind.

Gemäß einer bevorzugten Weiterentwicklung des Verfahrens erfolgt bei der räumlichen Annäherung der mobilen Speicher- und Verbrauchseinheit an eine ortsfeste Stromtankstelle ein automatischer Verbindungsaufbau der ersten Kommunikationsverbindung zwischen der Speicher- und Verbrauchseinheit und der Stromtankstelle. Diese Ausgestaltung erlaubt dem Nutzer der Speicher- und Verbrauchseinheit, den Strombezug oder die Stromeinspeisung ohne Zeitverzögerung beginnen zu können.

Die Speicher- und Verbrauchseinheit kann im Sinne der vorliegenden Erfindung vorzugsweise ein Fahrzeug mit mindestens einem elektrischen Antrieb sein. Unter einem derartigen Elektrofahrzeug wird ein Fahrzeug mit mindestens einem elektrischen Antrieb verstanden. Dies beinhaltet auch die Klasse der Fahrzeuge, die nur ergänzend mit einem elektrischen Antrieb ausgestattet sind, wie beispielsweise Hybridfahrzeuge. Wesentliches Merkmal eines Elektrofahrzeuges in diesem Sinne ist die Notwendigkeit eines elektrischen Energiespeichers, also einer Batterie bzw. eines Akkumulators. Durch Anbindung an ein elektrisches Versorgungsnetz kann dieser Akkumulator regelmäßig aufgeladen werden. Die Speicher- und Verbrauchseinheit im Sinne der vorliegenden Erfindung kann weiterhin auch eine Vorrichtung zur Bereitstellung von elektrischer Energie sein. Dabei können insbesondere auch die oben genannten Elektrofahrzeuge, also deren Akkumulatoren, zum Einspeisen von elektrischer Energie genutzt werden. Es kann weiterhin zweckmäßig sein, das Elektrofahrzeug dazu zusätzlich mit einer Vorrichtung zur Gewinnung von elektrischer Energie zu kombinieren, also beispielsweise mit einer auf dem Dach des Elektrofahrzeugs montierten Fotovoltaikanlage.

Als Stromtankstelle wird im Sinne dieser Erfindung eine Ladestation für eine mobile Speicher- und Verbrauchseinheit verstanden. Eine solche Stromtankstelle kann sich dazu im privaten Besitz in dessen Hausnetz befinden oder im Besitz eines Dritten an einem, ggf. öffentlich, für den Fahrzeugeigentümer zugänglichen Ort befinden. Die ortsfeste Stromtankstelle weist mindestens einen Stromzähler auf, wobei es bevorzugt ist, wenn diese zwei oder mehr Stromzähler aufweist.

Bei einer besonders vorteilhaften Ausgstaltungsform trägt auch die Speicher- und Verbrauchseinheit einen Stromzähler zur Erfassung der von der Stromtankstelle entgegengenommenen oder der an die Stromtankstelle abgegebenen Strommenge. Dieser Stromzähler kann dem Nutzer der Speicher- und Verbrauchseinheit dazu dienen, die von der Stromtankstelle empfangene oder die eingespeiste Energiemenge nachzuvollziehen. Die Stromzähler im Sinne dieser Erfindung können beliebig gestaltet sein, wobei, insbesondere für den Stromzähler der Stromtankstelle, lediglich sichergestellt sein muss, dass die vom Stromzähler ermittelten Werte auch automatisch an den Abrechnungsserver übermittelbar, insbesondere digitalisiert, sind. Weiterhin ist es bevorzugt, wenn die Stromtankstelle einen weiteren Stromzähler aufweist, der den gesamten Stromverbrauch der Stromtankstelle erfasst.

Gemäß einer vorteilhaften Weiterentwicklung des Verfahrens erfolgt die erste Kommunikationsverbindung kabelgebunden, insbesondere über das Ladekabel unter Nutzung von Powerline Communication oder Digitalstrom (Informationsübertragung im Basisband in der Nähe des Nulldurchganges des Wechselstromes) oder über ein separates Datenkabel, oder über Funk, insbesondere über WLAN, ZIGBee, Bluetooth, Transpondertechnologie oder RFID. Dabei kann die zweite Kommunikationsverbindung zwischen der Stromtankstelle und dem Abrechnungsserver und/oder die weitere Kommunikationsverbindung zwischen dem Abrechnungsserver für den Stationsbetrieb und dem Kunden-Abrechnungsserver kabelgebunden, vorzugsweise über DSL, ISDN, Festnetztelefon oder Powerline Communication, Digitalstrom oder über Funk erfolgen. Alternativ oder auch zusätzlich kann die zweite Kommunikationsverbindung auch direkt zwischen der Speicher- und Verbrauchseinheit und dem Abrechnungsserver über Funk erfolgen. Vorzugsweise wird die zweite Kommunikationsverbindung nach einer der beiden genannten Möglichkeiten und/oder die weitere Kommunikationsverbindung zwischen dem Abrechnungsserver für den Stationsbetrieb und dem Kunden-Abrechnungsserver über Funk als GSM, GPRS, UMTS, WiMAX, Funkrundsteuerung oder Paging ausgestaltet. Die letztgenannten Funkübertragungssysteme haben den Vorteil, dass auch gegebenenfalls größere Reichweiten möglich sind.

Gemäß einer zweckdienlichen Weiterentwicklung werden mithilfe eines an der Speicher- und Verbrauchseinheit angebrachten Ortungssystems Daten über den Aufenthaltsort der Speicher- und Verbrauchseinheit über Funk an eine Stromtankstelle oder direkt zum Abrechnungsserver übertragen.

Bei einer vorteilhaften Weiterentwicklung des Verfahrens sind auf dem Abrechnungsserver außerdem Daten zu mindestens einem Übertragungsnetzbetreiber hinterlegt. Es kann weiter zweckdienlich sein, auch Daten zu mindestens einem Stromverteilnetzbetreiber und/oder Daten zu mindestens einem Kundenlieferanten zu hinterlegen.

Das Verfahren hat insbesondere den Vorteil, dass der Bezug und die Einspeisung von Strom durch eine oder mehrere Speicher- und Verbrauchseinheiten an einer der Stromtankstellen zeitlich und/oder preislich gesteuert und/oder aufgrund von Regelstrategien zur Optimierung der Netzstabilität des Stromverteilnetzbetreibers erfolgen kann.

Gemäß einer bevorzugten Weiterentwicklung werden über die erste, die zweite und/oder die weitere Kommunikationsverbindung Transaktionsdaten übermittelt. Die Transaktionsdaten können dabei insbesondere Strompreise, Strompreis-Ober- und Untergrenzen oder Strommengen sein, denen jeweils ein bestimmter Zeitpunkt oder Zeitraum zugeordnet werden kann.

Bei einer vorteilhaften Weiterentwicklung des Verfahrens können die Transaktionsdaten über ein Eingabegerät im Fahrzeug, mobil oder an der Stromtankstelle erfasst werden und über ein Display an der Stromtankstelle angezeigt werden.

Die Abrechnung des Strombezugs an der Stromtankstelle bzw. der entsprechenden Stromeinspeisung kann vorzugsweise auf dem Abrechnungsserver oder auf dem Kunden-Abrechnungsserver mithilfe einer Software erfolgen. Ein solches Computerprogramm kann dazu einen oder mehrere der oben genannten Verfahrensschritte ausführen.

Ein Datenträger mit dem genannten Computerprogramm ist ebenfalls Gegenstand der vorliegenden Erfindung.

Die Ausgestaltung eines Stromzählers an der mobilen Speicher- und Verbrauchseinheit und einer Steuervorrichtung für eine Stromtankstelle sind jeweils Gegenstand der deutschen Patentanmeldungen 10 2008 044 527.4 und 10 2008 044 528.2.

Weitere Vorteile und Einzelheiten des erfindungsgemäßen Verfahrens ergeben sich aus den anhand der Zeichnung beschriebenen und die Erfindung nicht einschränkenden Ausführungsbeispielen.

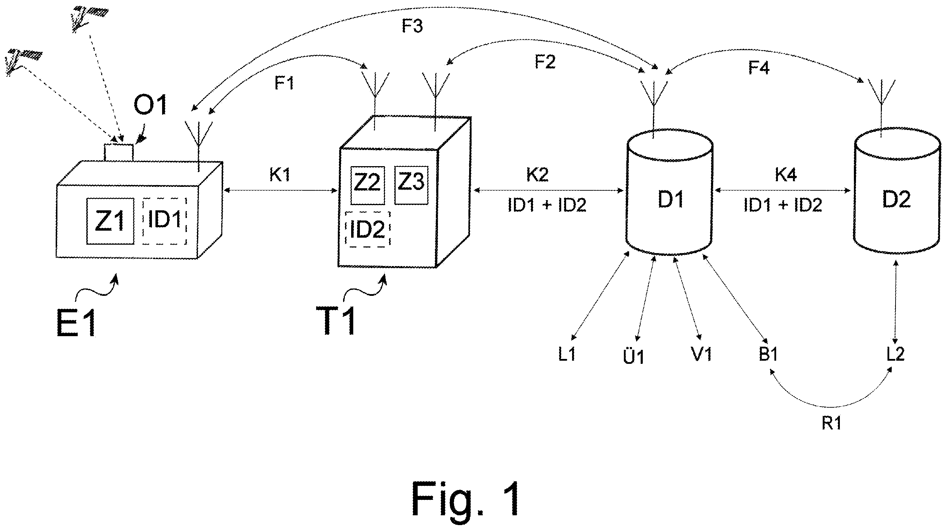

Dabei zeigt Fig. 1 eine abstrakte Darstellung des Verfahrens zum ortsunabhängigen Strombezug und/oder zur ortsunabhängigen Stromeinspeisung.

Gemäß der Fig. 1 ist die Anordnung eines Elektrofahrzeuges an einer Stromtankstelle, welche in ein Abrechnungssystem integriert ist, gemäß einem Ausführungsbeispiel abstrakt dargestellt. Die mobile Speicher- und Verbrauchseinheit E1 ist bei diesem Ausführungsbeispiel ein Elektrofahrzeug. Die ortsfeste Stromtankstelle T1 eines Stationsbetreibers B1, ausgewählt aus einer Vielzahl von zeichnerisch nicht dargestellten Stromtankstellen T1 - Tn, ist über Stromleitungen mindestens eines (Strom)-Verteilnetzbetreiber V1 verbunden und wird über diese Stromleitungen mit elektrischem Strom von einem Stationslieferanten L1 versorgt. Beim Annähern des Elektrofahrzeuges E1 an die Stromtankstelle T1 wird zwischen dem Elektrofahrzeug E1 und der Stromtankstelle T1 eine erste Kommunikationsverbindung K1 hergestellt. Diese erste Kommunikationsverbindung K1 ist bei dem dargestellten Ausführungsbeispiel gemäß Fig. 1 als Funkverbindung F1 ausgestaltet. Da diese Funkverbindung F1 lediglich für relativ kurze Distanzen ausgelegt sein muss, eignen sich hierfür insbesondere WLAN, ZIGBee, Bluetooth, Transpondertechnologie oder RFID. RFID kann ebenfalls für die Identifikation der mobilen Speicher- und Verbrauchseinheit E1 eingesetzt werden. Nach Herstellung der ersten Kommunikationsverbindung K1 wird ein Datenpaket über eine zweite Kommunikationsverbindung K2 an ein Datenmanagementsystem (Abrechnungsserver) D1 übermittelt, wobei dieses Datenpaket mindestens die Kennnummer ID1 und die Zählernummer ID2 enthält. Dem Elektrofahrzeug E1 ist eine eindeutige Kennnummer ID1 zugeordnet und die Stromtankstelle T1 trägt einen Stromzähler Z2 mit einer Zählernummer ID2, sowie einen weiteren Stromzähler Z3 zur Erfassung des gesamten Stromverbrauchs. Auf dem Abrechnungsserver D1 kann nun eine Zuordnung des Elektrofahrzeuges E1 mithilfe der Kennnummer ID1 zu einem Kundenlieferanten L2 sowie eine Zuordnung des Stromzählers Z2 mithilfe der Zählernummer ID2 zu einem Verteilnetzbetreiber V1 mithilfe der auf dem Abrechnungsserver D1 dazu hinterlegten Daten erfolgen. Somit kann zunächst ermittelt werden, bei welchem Kundenlieferanten L2 das Elektrofahrzeug registriert ist. Daraufhin wird ein weiteres Datenpaket, enthaltend mindestens die Kennnummer ID1 und die Zählernummer ID2, über eine weitere Kommunikationsverbindung K4 an den vorher ermittelten Kunden-Abrechnungsserver D2 übertragen, bei dem die Speicher- und Verbrauchseinheit registriert ist. Hierbei kann überprüft werden, ob das jeweilige Elektrofahrzeug E1 die Berechtigung hat, die Station des Stationsbetreibers B1 mitzubenutzen. Nach erfolgreicher Zuordnung und Freigabe der Speicher- und Verbrauchseinheit beim Kunden-Abrechnungsserver D2, erfolgt die Freischaltung der Stromtankstelle T1. Um einen reibungslosen Ablauf zu gewährleisten, besteht zwischen dem Stationsbetreiber B1 und dem Kundenlieferanten L2 ein Roaming-Abkommen R1, das es den Kunden des Kundenlieferanten L2 ermöglicht, die Stationen des fremden Stationsbetreibers B1 mitzubenutzen. Der Stationsbetreiber B1 hat vorzugsweise Roaming-Abkommen mit einer Vielzahl von unterschiedlichen Kundenlieferanten L2, die innerhalb Deutschlands oder in verschiedenen Ländern verteilt sein können.

Nach einer entsprechenden positiven Zuordnung über die Kommunikationsverbindung K4 kann die Stromtankstelle T1 mithilfe der zweiten Kommunikationsverbindung K2 freigeschaltet werden. Die Kommunikationsverbindungen K2 und K4 können kabelgebunden, insbesondere über DSL, ISDN, Festnetztelefon oder Powerline Communication, oder über Funk F2, F4 erfolgen. Gemäß eines alternativen Ausführungsbeispiels kann die Kommunikationsverbindung K2 direkt zwischen dem Elektrofahrzeug E1 und dem Abrechnungsserver D1 über Funk F3 erfolgen. Die entsprechenden Funkverbindungen F2, F3 und F4_müssen bei beiden Ausführungsbeispielen für größere Entfernungen ausgelegt sein, sodass insbesondere GSM, GPRS, UMTS, WiMAX, Funkrundsteuerung oder Paging in Frage kommen.

Nach der Freischaltung der Stromtankstelle T1 kann nun die Abgabe von Strom an das Elektrofahrzeug E1 oder die Einspeisung von Strom von dem Elektrofahrzeug E1 an die Stromtankstelle T1 über ein Ladekabel oder über eine berührungsfreie induktive Stromübertragung erfolgen. Die letztgenannte Möglichkeit der berührungsfreien induktiven Stromübertragung zwischen dem Elektrofahrzeug E1 und der Stromtankstelle T1 hat den besonderen Vorteil, dass bei der Energieübertragung nach dem erfindungsgemäßen Verfahren überhaupt keine physische Verbindung zwischen dem Elektrofahrzeug E1 und der Stromtankstelle T1 notwendig ist, wenn auch die erste Kommunikationsverbindung K1 als Funkverbindung F1 ausgestaltet ist. Daraus ergibt sich für den Nutzer des Elektrofahrzeuges E1 ein besonders hoher Bedienungskomfort.

Nach Beendigung der Energieübertragung kann der von dem Elektrofahrzeug E1 an der Stromtrankstelle T1 entnommene oder eingespeiste Strombetrag über die Kommunikationsverbindung K2 an den Abrechnungsserver D1 und über die Kommunikationsverbindung K4 an den Kunden-Abrechnungsserver D2 übermittelt werden.

Der Abrechnungsserver D1 empfängt also über die Kommunikationsverbindungen K2 oder F2 Messdaten vom Stromzähler Z2 und die Kennnummer ID1, welche direkt der jeweiligen Verbrauchs- und Speichereinheit E1 und der Stromtankstelle T1 zugeordnet werden kann. Auf dem Abrechnungsserver ist dazu hinterlegt, welchem Kundenlieferanten L2 das Elektrofahrzeug mit der Kennnummer ID1 zugeordnet ist und zudem, welchem Verteilnetzbetreiber V1 der Zähler Z2 mit der Zählernummer ID2 zugeordnet ist. Nach erfolgter Zuordnung des Zählers Z2 zum jeweiligen Kundenlieferanten L2 für den jeweiligen Ladevorgang werden auf dem Kunden-spezifischen Abrechnungsserver D2 die Daten zum Kunden/Elektrofahrzeug abgefragt und nach erfolgreicher Authentifizierung und Autorisierung die Stromtankstelle freigeschaltet. Dies ermöglicht erstmals eine kundenspezifische Abrechnung der aus dem Stromnetz entnommenen Menge elektrischer Energie bei einem sich örtlich dynamisch verhaltenen Energieverbrauch. Als Stationslieferant im Sinne der Erfindung wird ein Energieversorgungsunternehmen verstanden, welches eine Geschäftsbeziehung mit dem Stationsbetreiber B1 zur Belieferung mit elektrischer Energie unterhält. Dieser ist weiterhin für die Energie- und Netzlogistik verantwortlich. Als Kundenlieferant L2 im Sinne dieser Erfindung wird ein Energieversorgungsunternehmen verstanden, welches eine Geschäftsbeziehung mit dem Besitzer eines Elektrofahrzeuges E1 zur Belieferung mit elektrischer Energie unterhält. In einer weiteren vorteilhaften Erweiterung des Verfahrens wird dem Verteilnetzbetreiber V1 ein gesonderter Zähler zugeordnet. Dies gestattet eine getrennte Erfassung des Eigenverbrauchs der Ladestation.

Mithilfe der Stromtankstelle T1 und des Abrechnungsservers D1, sowie des Kunden-Abrechnungsservers D2 wird es für den Kundenlieferanten L2 erstmals möglich, das Elektrofahrzeug E1 abzurechnen, unabhängig davon, welche Stromtankstelle T1 dieses aufsucht und unabhängig davon, ob das Elektrofahrzeug E1 eine Stromtankstelle aufsucht, die von einem Kundenlieferanten L1 betrieben wird, bei welchem das Elektrofahrzeug angemeldet ist, oder ob das Fahrzeug eine Stromtankstelle, die von einem davon abweichenden Stationsbetreiber B1 betrieben wird, aufsucht. Dadurch, dass ein Roaming-Abkommen zwischen dem Stationsbetreiber B1 und dem Kundenlieferanten L2 besteht, können alle Kunden des Kundenlieferanten L2 ebenfalls die Stromtankstellen des Stationsbetreibers B1 benutzen, wobei eine Abrechnung über den jeweiligen Kundenlieferanten L2 weiterhin möglich ist.

Als Verteilnetzbetreiber V1 wird ein Energieversorgungsunternehmen verstanden, dessen Geschäftszweck im Aufbau und Betrieb des Strom-Verteilnetzes besteht. In diesem Verteilnetz befindet sich die Stromtankstelle T1 an einem definierten Ort. Der Verteilnetzbetreiber V1 hat mit dem Stationslieferanten L1 eine vertragliche Beziehung, die es dem Stationslieferanten L1 erlaubt, flexibel innerhalb des Gebietes des Verteilnetzbetreibers beliebige Stromtankstellen T1 - Tn dazu zu nutzen, den Besitzer des Elektrofahrzeuges E1 mit elektrischer Energie zu beliefern. Beim Strombezug fällt ein Nutzungsentgelt an, welches der Stationsbetreiber B1 auf Basis des Stromzählers Z2 kumuliert und über den Stationslieferanten L1 an den Verteilnetzbetreiber V1 bezahlt. Bei der Einspeisung aus dem Elektrofahrzeug E1 in das Netz des Verteilnetzbetreibers V1 erhält der Besitzer des Elektrofahrzeuges E1 eine Einspeisevergütung vom Kundenlieferanten L2, die dieser vom Stationsbetreiber B1 erhält.

Als Übertragungsnetzbetreiber Ü1 wird ein Energieversorgungsunternehmen verstanden, dessen Geschäftszweck in dem Aufbau und Betrieb des Übertragungsnetzes besteht. Als weitere Kernaufgabe, die sich der Übertragungsnetzbetreiber Ü1 mit dem Verteilnetzbetreiber V1 teilt, wird die Sicherstellung der Netzstabilität durch ein entsprechendes Angebot von Regelenergie betrieben. Diese Regelenergie kann situationsabhängig durch das Elektrofahrzeug E1 in das Netz des Verteilnetzbetreibers V1 eingespeist werden und wird über die Strecke Elektrofahrzeug E1 - Kommunikationsverbindung K1 - Stromtankstelle T1 - zweite Kommunikationsverbindung K2 - Abrechnungsserver D1 - weitere Kommunikationsverbindung K4 - Kunden-Abrechnungsserver D2 verrechnet.

Neben der Möglichkeit zur Abrechnung des örtlich flexiblen Strombezugs ist über die Anordnung Elektrofahrzeug E1 - erste Kommunikationsverbindung K1 - Stromtankstelle T1 - zweite Kommunikationsverbindung K2 - Abrechnungsserver D1- weitere Kommunikationsverbindung K4 - Kunden-Abrechnungsserver D2 ebenfalls erstmals die Abrechnung der Einspeisung elektrischer Energie aus dem elektrischen Speicher eines Elektrofahrzeuges E1 in das Netz des Verteilnetzbetreibers V1 oder aber direkt in das Hausnetz zum Eigenverbrauch möglich. Damit bildet das Elektrofahrzeug eine "virtuelle Versorgungsinsel", die in Zeiten hohen Energieverbrauchs das öffentliche Versorgungsnetz des Verteilnetzbetreibers V1 entlastet. Das erfindungsgemäße Verfahren stellt dies durch eine differenzierte Messung der entnommenen und eingespeisten Energie sicher, mit der Doppelzählung ausgeschlossen wird. Diese differenzierte Messung kann ggf. auch durch mehrere Messeinrichtungen (Submetering) erfolgen.

Die Einspeisung kann preislich oder zeitlich gesteuert oder aber aufgrund von Regelstrategien zur Optimierung der Netzstabilität des Verteilnetzbetreibers V1 erfolgen. Die erste Kommunikationsverbindung K1 zwischen dem Elektrofahrzeug E1 und der Stromtankstelle T1 kann beliebig gestaltet sein. So kann die Kommunikationsverbindung K1 einerseits kabelgebunden ausgestaltet sein. Dabei ist zu unterscheiden zwischen einer Kommunikation unter Benutzung des Ladekabels, wie beispielsweise wechselstrombasierte Verfahren, insbesondere PLC, vorzugsweise Powerline nach Homeplug oder anderen Standards usw. oder Digitalstrom. Die Kommunikationsverbindungen K2 und K4 können aber auch über ein separates Datenkabel erfolgen, welches parallel zum Ladekabel eingesetzt wird, beispielsweise TCP/IP über Ethernetkabel CAT5 mit RJ45-Buchsen oder als serielle Verbindung RS232, RS485 oder ein sonstiges Serielles oder Datenbus-Sytem.

Die Ausgestaltung der ersten Kommunikationsverbindung K1 als Funkverbindung F1 über RFID- oder Transpondertechnologie würde beispielsweise genügen, um die Kennnummer ID1 und ggf. den Zählerstand des Zählers Z1 auszulesen.

Bei der direkten funkbasierten Kommunikation F3 zwischen dem Elektrofahrzeug E1 und dem Abrechnungsserver D1 nimmt das Elektrofahrzeug E1 über die erste Kommunikationsverbindung K1 Kontakt zu der Stromtankstelle T1 auf, um den Zählerstand des Stromzählers Z2 mit der Zählernummer ID2 abzuholen. Dann schickt das Elektrofahrzeug E1 über die Funkverbindung F3 einen Datensatz mit der Kennnummer ID1 und der Zählernummer ID2 an den Abrechnungsserver D1 und über die Funkverbindung F4 einen Datensatz an den Kunden-Abrechnungsserver D2 und holt sich dort die Freigabe zum Bezug von Strom bzw. zum Einspeisen von Strom. Nach dem "Tankvorgang" erfolgt über dieselbe Strecke die Übermittlung der Stromverbrauchswerte an den Abrechnungsserver D1 und an den Kunden-Abrechnungsserver D2. Als zweckmäßige Weiterentwicklung des Systems ist eine Kombination mit einem Ortungssystem O1 möglich. Die Ortung kann dazu satellitengestützt, beispielsweise über GPS, Galileo usw., mobilfunkgestützt über die Lokalisierung innerhalb der GSM-Funkzelle oder aber auch als Car-to-car-Kommunikation erfolgen, bei welcher verschiedenste Elektrofahrzeuge E1 sich über Zustandsdaten des Fahrzeugs oder über Informationen, beispielsweise bezüglich der nächsten Stromtankstelle T1 bis Tn, austauschen. Auf Basis dieser Daten ist eine Erweiterung möglich, um den bisherigen Energieverbrauch und den Ladezustand der Batterie mit der geplanten Fahrtroute zu einer rechnerischen Reichweite zu kombinieren und daraus die optimale Stromtankstelle T1 bis Tn in Abhängigkeit vom aktuellen Strombezugspreis und der jeweiligen Netzauslastung zu ermitteln.

### Bezugszeichenliste:

- E1: Mobile Speicher- und Verbrauchseinheit/Elektrofahrzeug
- T1: Ortsfeste Stromtankstelle
- O1: Ortungssystem
- D1: Datenmanagementsystem / zentraler Abrechnungsserver
- D2: Kunden-Abrechnungsserver
- B1: Stationsbetreiber
- L1: (Strom-)Stationslieferant
- L2: (Strom-)Kundenlieferant
- Ü1: Übertragungsnetzbetreiber
- V1: (Strom-)Verteilnetzbetreiber
- Z1, Z2, Z3: (Strom-)Zähler
- ID1: Kennnummer der Speicher- und Verbrauchseinheit E1
- ID2: Zählernummer des Stromzählers Z2
- R1: Roaming-Abkommen
- F1, F2, F3, F4: Funkverbindungen
- K1, K2, K4: Kommunikationsverbindungen

## Patentansprüche

1. Verfahren zum ortsunabhängigen Strombezug und/oder zur ortsunabhängigen Stromeinspeisung einer mobilen Speicher- und Verbrauchseinheit (E1) an einer ortsfesten Stromtankstelle (T1) eines beliebigen Stationsbetreibers (B1), wobei eine Vielzahl von Stromtankstellen (T1 - Tn) über Stromleitungen mindestens eines Stromverteilnetzbetreibers (V1) mit Strom von einem Stationslieferanten (L1) versorgt werden und mindestens folgende Verfahrensschritte durchgeführt werden:
- Herstellen einer ersten Kommunikationsverbindung (K1) zur Übermittlung eines ersten Datenpaketes zwischen der Speicher- und Verbrauchseinheit (E1) und der Stromtankstelle (T1) bei räumlicher Annäherung der mobilen Speicher- und Verbrauchseinheit (E1) an die ortsfeste Stromtankstelle (T1), wobei der Speicher- und Verbrauchseinheit (E1) eine eindeutige Kennnummer (ID1) zugeordnet ist, die eine Zuordnung zu einem Kundenlieferanten (L2) erlaubt, und die Stromtankstelle (T1) mindestens einen Stromzähler (Z2) mit einer Zählernummer (ID2) trägt;
- Übermittlung eines zweiten Datenpaketes, enthaltend mindestens die Kennnummer (ID1) und die Zählernummer (ID2), über eine zweite Kommunikationsverbindung (K2) zwischen der Stromtankstelle und einem Abrechnungsserver, wobei der Abrechnungsserver (D1) einem Stationsbetreiber (B1) zugeordnet ist;
- Zuordnung der Speicher- und Verbrauchseinheit (E1) zu einem Kundenlieferanten (L2) mit Hilfe des von der mobilen Speicher- und Verbrauchseinheit übermittelten ersten Datenpaketes;
- Übermittlung eines dritten Datenpaketes, enthaltend mindestens die Kennnummer (ID1) und die Zählernummer (ID2), an einen Kunden-Abrechnungsserver (D2), bei dem die Speicher- und Verbrauchseinheit registriert ist, über eine weitere Kommunikationsverbindung (K4) zwischen dem Abrechnungsserver und dem Kunden-Abrechnungsserver (D2);
- Freischalten der Stromtankstelle (T1) nach erfolgreicher Zuordnung und Freigabe durch den Kunden-Abrechnungsserver (D2);
- Abgabe von Strom an die Speicher- und Verbrauchseinheit (E1) oder Einspeisung von Strom von der Speicher- und Verbrauchseinheit (E1) an die Stromtankstelle (T1) über ein Ladekabel oder über eine berührungsfreie, vorzugsweise induktive oder kapazitive, Stromübertragung; und
- Übermittlung der von der Speicher- und Verbrauchseinheit (E1) an die Stromtankstelle (T1) entnommenen oder eingespeisten Strommenge über die zweite Kommunikationsverbindung (K2) an den Abrechnungsserver (D1);
**wobei** zwischen dem Stationsbetreiber (B1) und dem Kundenlieferanten (L2) ein Roaming-Abkommen (R1) besteht; und
**wobei** in der Stromtankstelle (T1) der gesamte Stromverbrauch der Stromtankstelle (T1) über einen weiteren Stromzähler (Z3) erfasst wird.

2. Verfahren nach Anspruch 1, **dadurch gekennzeichnet,**
- **dass** der Stationslieferant (L1) zugleich die Stromtankstellen T1 - Tn betreibt, und/oder
- **dass** eine direkte Kommunikation zwischen dem Stationslieferanten (L1) und dem Kundenlieferanten (L2) erfolgt und zwischen Stationslieferant (L1) und Kundenlieferant (L2) ein Roaming-Abkommen besteht.

3. Verfahren nach einem der vorherigen Ansprüche, **dadurch gekennzeichnet, dass** der Transfer der Roaming-Daten von Clearing-Häusern realisiert werden, wobei diese vorzugsweise zusätzlich mindestens eine der folgenden Aufgabe übernehmen:
- Überprüfung der Datenkonsistenz,
- Überprüfung und Koordination der Tarife,
- Zuordnung der Speicher- und Verbrauchseinheit (E1) zu einem Kundenlieferanten (L2),
- Freischaltung der Stromtankstelle (T1),
- Rechnungsabwicklung.

4. Verfahren nach einem der vorherigen Ansprüche, **dadurch gekennzeichnet,**
- **dass** bei der räumlichen Annäherung der mobilen Speicher- und Verbrauchseinheit (E1) an eine ortsfeste Stromtankstelle (T1) ein automatischer Verbindungsaufbau der ersten Kommunikationsverbindung (K1) zwischen diesen beiden erfolgt; und/oder
- **dass** die mobile Speicher- und Verbrauchseinheit (E1) ein Fahrzeug mit mindestens einem elektrischen Antrieb ist; und/oder
- **dass** die Speicher- und Verbrauchseinheit (E1) einen Stromzähler (Z1) zur Erfassung der von der Stromtankstelle (T1) entgegengenommenen oder der an die Stromtankstelle (T1) abgegebenen Strommenge trägt.

5. Verfahren nach einem der vorherigen Ansprüche, **dadurch gekennzeichnet,**
- **dass** die erste Kommunikationsverbindung (K1) kabelgebunden, insbesondere über das Ladekabel oder über ein separates Datenkabel, oder
- über Funk (F1), insbesondere WLAN, Zigbee, Bluetooth, Transpondertechnologie oder RFID, erfolgt; und/oder
- **dass** die zweite Kommunikationsverbindung (K2) zwischen der Stromtankstelle (T1) und dem Abrechnungsserver (D1) und/oder die weitere Kommunikationsverbindung (K4) kabelgebunden, vorzugsweise über DSL, ISDN, Festnetztelefon oder Powerline, oder über Funk (F2) erfolgt; oder
- **dass** die zweite Kommunikationsverbindung (K2) und/oder die weitere Kommunikationsverbindung (K4) über Funk (F2, F3, F4), vorzugsweise GSM, GPRS, UMTS, WiMAX, Funkrundsteuerung oder Paging, erfolgt.

6. Verfahren nach einem der vorherigen Ansprüche, **dadurch gekennzeichnet, dass** mit Hilfe eines an der Speicher- und Verbrauchseinheit (E1) angebrachten Ortungssystems (01) Daten über den Aufenthaltsort über Funk an eine Stromtankstelle (T1) oder direkt zum Abrechnungsserver (D1) übertragen werden.

7. Verfahren nach einem der vorherigen Ansprüche, **dadurch gekennzeichnet, dass** auf dem Abrechnungsserver (D1) weiterhin Daten zu mindestens einem Übertragungsnetzbetreiber (01) und/oder Daten zu mindestens einem Stromverteilnetzbetreiber (V1) und/oder Daten zu mindestens einem Kundenlieferanten (L2) hinterlegt sind.

8. Verfahren nach einem der vorherigen Ansprüche, **dadurch gekennzeichnet, dass** der Bezug und die Einspeisung von Strom durch eine oder mehrere Speicher- und Verbrauchseinheiten (E1) an einer der Stromtankstellen (T1-Tn) zeitlich und/oder preislich gesteuert und/oder aufgrund von Regelstrategien zur Optimierung der Netzstabilität des Stromverteilnetzbetreibers (V1) erfolgt.

9. Verfahren nach einem der vorherigen Ansprüche, **dadurch gekennzeichnet, dass** über die erste und/oder die zweite Kommunikationsverbindung und/oder die weitere Kommunikationsverbindung (K1, K2, K4) Transaktionsdaten übermittelt werden, die bevorzugt eine vom Kunden nachgefragte oder angebotene Energiemenge oder Leistung betreffen, wobei es sich bei den Transaktionsdaten vorzugsweise um Strompreise, Strompreis-Ober- und Untergrenzen oder Strommengen handelt, denen jeweils ein bestimmter Zeitpunkt oder Zeitraum zugeordnet werden kann.

10. Verfahren nach Anspruch 9, **dadurch gekennzeichnet, dass** die Transaktionsdaten des Kunden mit hierzu korrespondierenden Transaktionsdaten des Energieversorgers in Einklang gebracht werden und auf diese Weise Energiemengen, Zeiten und Leistungen für Energiekaufaktionen und Energieverkaufsaktionen zwischen Kunde und Energieversorger ermittelt werden, wobei die Transaktionsdaten vorzugsweise über ein Eingabegerat im Fahrzeug, mobil, oder an der Stromtankstelle erfasst werden können und über ein Display an der Stromtankstelle angezeigt werden können.

11. Ortsfeste Stromtankstelle (T1) zum ortsunabhängigen Strombezug und/oder zur ortsunabhängigen Stromeinspeisung durch eine mobile Speicher- und Verbrauchseinheit (E1) an der ortsfesten Stromtankstelle, wobei die Stromtankstelle (T1) über Stromleitungen mindestens eines Stromverteilnetzbetreibers (V1) mit Strom von einem Stationslieferanten (L1) versorgt wird, mit:
- einer ersten Kommunikationseinheit zum Herstellen einer ersten Kommunikationsverbindung (K1) zur Übermittlung eines ersten Datenpaketes zwischen der Speicher- und Verbrauchseinheit (E1) und der Stromtankstelle (T1) bei räumlicher Annäherung der mobilen Speicher- und Verbrauchseinheit (E1) an die ortsfeste Stromtankstelle (T1), wobei der Speicher- und Verbrauchseinheit (E1) eine eindeutige Kennnummer (ID1) zugeordnet ist, die eine Zuordnung zu einem Kundenlieferanten (L2) erlaubt, und die Stromtankstelle (T1) mindestens einen Stromzähler (Z2) mit einer Zählernummer (ID2) trägt;
- einer zweiten Kommunikationseinheit zum Übermitteln eines zweiten Datenpaketes, enthaltend mindestens die Kennnummer (ID1) und die Zählernummer (ID2), über eine zweite Kommunikationsverbindung (K2) zwischen der Stromtankstelle und einem Abrechnungsserver, wobei der Abrechnungsserver (D1) einem Stationsbetreiber (B1) zugeordnet ist;
- einer Stromtankstellen-Freischalteinheit zum Freischalten der Stromtankstelle (T1) nach erfolgreicher Zuordnung und Freigabe durch den Kunden-Abrechnungsserver (D2);
- einer Abgabeeinheit zum Abgeben von Strom an die Speicher- und Verbrauchseinheit (E1) oder Einspeisen von Strom von der Speicher- und Verbrauchseinheit (E1) an die Stromtankstelle (T1) über ein Ladekabel oder über eine berührungsfreie, vorzugsweise induktive oder kapazitive, Stromübertragung;
- wobei die zweite Kommunikationseinheit zum Übermitteln der von der Speicher- und Verbrauchseinheit (E1) an der Stromtankstelle (T1) entnommenen oder eingespeisten Strommenge über die zweite Kommunikationsverbindung (K2) an den Abrechnungsserver (D1) ausgebildet ist;
**wobei** zwischen dem Stationsbetreiber (B1) und dem Kundenlieferanten (L2) ein Roaming-Abkommen (R1) besteht; und
**wobei** die Stromtankstelle (T1) einen weiteren Stromzähler (Z3) zum Erfassen des gesamten Stromverbrauchs umfasst.

12. System zum ortsunabhängigen Strombezug und/oder zur ortsunabhängigen Stromeinspeisung einer mobilen Speicher- und Verbrauchseinheit (E1) an einer ortsfesten Stromtankstelle (T1) eines beliebigen Stationsbetreibers (B1), wobei eine Vielzahl von Stromtankstellen (T1 - Tn) über Stromleitungen mindestens eines Stromverteilnetzbetreibers (V1) mit Strom von einem Stationslieferanten (L1) versorgt werden, das System umfassend:
- eine ortsfeste Stromtankstelle nach Anspruch 11;
- einen Abrechnungsserver (D1), der einem Stationsbetreiber (B1) zugeordnet ist, mit:
i. einer Empfangseinheit zum Empfangen des zweiten Datenpaketes und der von der Speicher- und Verbrauchseinheit (E1) an der Stromtankstelle (T1) entnommenen oder eingespeisten Strommenge über die zweite Kommunikationsverbindung (K2);
ii. einer Zuordnungseinheit zum Zuordnen der Speicher- und Verbrauchseinheit (E1) zu dem Kundenlieferanten (L2) mit Hilfe des von der mobilen Speicher- und Verbrauchseinheit übermittelten ersten Datenpaketes; und
iii. einer Übermittlungseinheit zum Übermitteln eines dritten Datenpaketes über die weitere Kommunikationsverbindung (K4); und
- einen Kunden-Abrechnungsserver, bei dem die Speicher- und Verbrauchseinheit registriert ist, mit einer Kommunikationseinheit zum Empfangen des dritten Datenpaketes von dem Abrechnungsserver.

## Claims

1. Method for location-independent electricity withdrawal and/or location-independent feeding in of electricity by a mobile storage and consumption unit (E1) at a stationary charging station (T1) of an arbitrary station operator (B1), wherein a plurality of charging stations (T1 - Tn) are supplied with electricity by a station supplier (L1) via electricity supply lines of at least one electricity distribution network operator (V1) and at least the following method steps are carried out:
- establishing a first communication connection (K1) for transmission of a first data packet between the storage and consumption unit (E1) and the charging station (T1) when the mobile storage and consumption unit (E1) spatially approaches the stationary charging station (T1), wherein the storage and consumption unit (E1) is assigned a unique identification number (ID1), which allows for an allocation to a customer supplier (L2), and the charging station (T1) carries at least one electricity meter (Z2) with a meter number (ID2);
- transmission of a second data packet comprising at least the identification number (ID1) and the meter number (ID2) via a second communication connection (K2) between the charging station and a billing server, wherein the billing server (D1) is allocated to a station operator (B1);
- allocation of the storage and consumption unit (E1) to a customer supplier (L2) by means of the first data packet transmitted by the mobile storage and consumption unit;
- transmission of a third data packet, comprising at least the identification number (ID1) and the meter number (ID2), to a customer billing server (D2) at which the storage and consumption unit is registered via a further communication connection (K4) between the billing server and the customer billing server (D2);
- activation of the charging station (T1) after successful allocation and approval by the customer billing server (D2);
- delivery of electricity to the storage and consumption unit (E1) or feeding in of electricity from the storage and consumption unit (E1) to the charging station (T1) via a charging cable or via non-contact, preferably inductive or capacitive, electricity transmission; and
- transmission to the billing server (D1) of the amount of electricity withdrawn from or fed into the charging station (T1) by the storage and consumption unit (E1) via the second communication connection (K2);
**wherein** there exists a roaming agreement (R1) between the station operator (B1) and the customer supplier (L2); and
**wherein** the entire electricity consumption of the charging station (T1) is registered in the charging station (T1) by means of a further electricity meter (Z3).

2. Method according to claim 1, **characterized in**
- **that** the station supplier (L1) also operates the charging stations T1 - Tn, and/or
- **that** direct communication takes place between the station supplier (L1) and the customer supplier (L2) and there exists a roaming agreement between station supplier (L1) and customer supplier (L2).

3. Method according to any one of the preceding claims, **characterized in that** the transfer of roaming data is realized by clearing houses, wherein these preferably additionally take over at least one of the following tasks:
- checking data consistency,
- checking and coordinating tariffs,
- allocating the storage and consumption unit (E1) to a customer supplier (L2)
- activating the charging station (T1),
- invoice processing.

4. Method according to any one of the preceding claims, **characterized in**
- **that** when the mobile storage and consumption unit (E1) spatially approaches a stationary charging station (T1), the first communication connection (K1) between the two is automatically set up; and/or
- **that** the mobile storage and consumption unit (E1) is a vehicle with at least one electric drive; and/or
- **that** the storage and consumption unit (E1) carries an electricity meter (Z1) for registering the amount of electricity received by the charging station (T1) or delivered to the charging station (T1).

5. Method according to any one of the preceding claims, **characterized in**
- **that** the first communication connection (K1) is wired, in particular via the charging cable or via a separate data cable, or takes place via radio (F1), in particular WLAN, Zigbee, Bluetooth, transponder technology or RFID; and/or
- **that** the second communication connection (K2) between the charging station (T1) and the billing server (D1) and/or the further communication connection (K4) is wired, preferably via DSL, ISDN, landline telephone or powerline, or takes place via radio (F2); or
- **that** the second communication connection (K2) and/or the further communication connection (K4) takes place via radio (F2, F3, F4), preferably GSM, GPRS, UMTS, WiMAX, radio ripple control or paging.

6. Method according to any one of the preceding claims, **characterized in that** by means of a location system (O1) attached to the storage and consumption unit (E1) data on the location are transmitted via radio to a charging station (T1) or directly to the billing server (D1).

7. Method according to any one of the preceding claims, **characterized in that** data on at least one transmission network operator (Ü1) and/or data on at least one electricity distribution network operator (V1) and/or data on at least one customer supplier (L2) are still stored on the billing server (D1).

8. Method according to any one of the preceding claims, **characterized in that** the withdrawing and feeding in of electricity by one or more storage and consumption units (E1) at one of the charging stations (T1-Tn) is regulated in terms of time and/or price and/or is carried out on the basis of regulation strategies for optimizing grid stability for the electricity distribution network operator (V1).

9. Method according to any one of the preceding claims, **characterized in that** transaction data are transmitted via the first and/or the second communication connection and/or the further communication connection (K1, K2, K4), which transaction data preferably concern an amount of energy or service requested or offered by the customer, wherein the transaction data preferably are electricity prices, upper and lower limits of the electricity price or quantities of electricity, each of which can be allocated a specific instant or period of time.

10. Method according to claim 9, **characterized in that** the customer's transaction data are brought in line with corresponding transaction data of the energy supplier and in this way energy quantities, times and services for energy purchase campaigns and energy sales campaigns between customer and energy supplier are determined, wherein the transaction data can preferably be recorded by means of an input device in the vehicle, by mobile devices, or at the charging station and can be displayed on a display at the charging station.

11. Stationary charging station (T1) for location-independent electricity withdrawal and/or location-independent feeding in of electricity by a mobile storage and consumption unit (E1) at the stationary charging station, wherein the charging station (T1) is supplied with electricity by a station supplier (L1) via electricity supply lines of at least one electricity distribution network operator (V1), comprising:
- a first communication unit for establishing a first communication connection (K1) for transmission of a first data packet between the storage and consumption unit (E1) and the charging station (T1) when the mobile storage and consumption unit (E1) spatially approaches the stationary charging station (T1), wherein the storage and consumption unit (E1) is assigned a unique identification number (ID1), which allows for an allocation to a customer supplier (L2), and the charging station (T1) has at least one electricity meter (Z2) with a meter number (ID2);
- a second communication unit for transmitting a second data packet, comprising at least the identification number (ID1) and the meter number (ID2), via a second communication connection (K2) between the charging station and a billing server, wherein the billing server (D1) is allocated to a station operator (B1);
- a charging station activation unit for activating the charging station (T1) after successful allocation and approval by the customer billing server (D2);
- a delivery unit for delivering electricity to the storage and consumption unit (E1) or feeding in of electricity from the storage and consumption unit (E1) into the charging station (T1) via a charging cable or via non-contact, preferably inductive or capacitive, electricity transmission;
- wherein the second communication unit is designed to transmit the amount of electricity withdrawn from or fed into the charging station (T1) by the storage and consumption unit (E1) via the second communication connection (K2) to the billing server (D1);
**wherein** there exists a roaming agreement (R1) between the station operator (B1) and the customer supplier (L2); and
**wherein** the charging station (T1) comprises a further electricity meter (Z3) for registering the entire electricity consumption.

12. System for location-independent electricity withdrawal and/or location-independent feeding in of electricity by a mobile storage and consumption unit (E1) at a stationary charging station (T1) of an arbitrary station operator (B1), wherein a plurality of charging stations (T1 - Tn) are supplied with electricity by a station supplier (L1) via electricity supply lines of at least one electricity distribution network operator (V1), the system comprising:
- a stationary charging station according to claim 11;
- a billing server (D1) that is allocated to a station operator (B1), comprising:
i. a reception unit for receiving the second data packet and the amount of electricity withdrawn from or fed into the charging station (T1) by the storage and consumption unit (E1) via the second communication connection (K2);
ii. an allocation unit for allocating the storage and consumption unit (E1) to the customer supplier (L2) by means of the first data packet transmitted by the mobile storage and consumption unit (E1); and
iii. a transmission unit for transmitting a third data packet via the further communication connection (K4); and
- a customer billing server, at which the storage and consumption unit is registered, comprising a communication unit for receiving the third data packet from the billing server.

## Revendications

1. Procédé d'achat d'électricité indépendamment du lieu et/ou d'alimentation en courant indépendamment du lieu d'une unité d'accumulation et de consommation mobile (E1) au niveau d'une station de recharge fixe (T1) d'un exploitant de station (B1) quelconque, dans lequel une pluralité de stations de recharge (T1 - Tn) sont alimentées en courant par des conduites de courant d'au moins un exploitant de réseau de distribution d'électricité (V1) par un fournisseur de stations (L1) et au moins les étapes suivantes sont exécutées :
- établissement d'une première liaison de communication (K1) pour la transmission d'un premier paquet de données entre l'unité d'accumulation et de consommation (E1) et la station de recharge (T1) lors de l'approche physique de l'unité d'accumulation et de consommation mobile (E1) de la station de recharge fixe (T1), dans lequel, à l'unité d'accumulation et de consommation (E1) est attribué un identifiant unique (ID1) qui permet d'établir une correspondance avec un fournisseur de clients (L2) et la station de recharge (T1) comprend au moins un compteur de courant (Z2) avec un numéro de compteur (ID2) ;
- transmission d'un deuxième paquet de données contenant au moins l'identifiant (ID1) et le numéro de compteur (ID2), par l'intermédiaire d'une deuxième liaison de communication (K2) entre la station de recharge et un serveur de facturation, dans lequel le serveur de facturation (D1) correspond à un exploitant de station (B1) ;
- attribution de l'unité d'accumulation et de consommation (E1) à un fournisseur de clients (L2) à l'aide du premier paquet de données transmis par l'unité d'accumulation et de consommation mobile ;
- transmission d'un troisième paquet de données contenant au moins l'identifiant (ID1) et le numéro de compteur (ID2) à un serveur de facturation de client (D2), dans lequel l'unité d'accumulation et de consommation est enregistrée, par l'intermédiaire d'une liaison de communication supplémentaire (K4) entre le serveur de facturation et le serveur de facturation du client (D2) ;
- libération de la station de recharge (T1) après une attribution réussie et validation par le serveur de facturation de client (D2) ;
- distribution de courant à l'unité d'accumulation et de consommation (E1) ou alimentation en courant de la station de recharge (T1) par l'unité d'accumulation et de consommation (E1) par l'intermédiaire d'un câble de charge ou par l'intermédiaire d'une transmission de courant sans contact, de préférence inductive ou capacitive ; et
- transmission de la quantité de courant prélevée ou introduite par l'unité d'accumulation et de consommation (E1) dans la station de charge (T1) par l'intermédiaire de la deuxième liaison de communication (K2) au serveur de facturation (D1) ;
dans lequel, entre l'exploitant de station (B1) et le fournisseur de client (L2), il existe un accord d'itinérance (R1) ; et
dans lequel, dans la station de recharge (T1) l'ensemble de la consommation de courant de la station de recharge (T1) est mesurée par l'intermédiaire d'un compteur de courant supplémentaire (Z3).

2. Procédé selon la revendication 1, **caractérisé en ce que**
- le fournisseur de station (L1) exploite simultanément les stations de recharge T1 - Tn et/ou
- une communication directe au lieu entre le fournisseur de station (L1) et le fournisseur de client (L2) et, entre le fournisseur de station (L1) et le fournisseur de client (L2), il existe un accord d'itinérance.

3. Procédé selon l'une des revendications précédentes, **caractérisé en ce que** le transfert des données d'itinérance est réalisé par des chambres de compensation, dans lequel celles-ci prennent en charge de préférence en outre au moins une des tâches suivantes :
- contrôle de la cohérence des données,
- contrôle et coordination des tarifs,
- attribution de l'unité d'accumulation et de consommation (E1) à un fournisseur de client (L2),
- libération de la station de recharge (T1),
- traitement des factures.

4. Procédé selon l'une des revendications précédentes, **caractérisé en ce que**
- lors d'une approche de l'unité d'accumulation et de consommation mobile (E1) d'une station de recharge fixe (T1), a lieu un établissement automatique de la première liaison de communication (K1) entre elles ; et/ou
- l'unité d'accumulation et de consommation mobile (E1) est un véhicule avec au moins un entraînement électrique ; et/ou
- l'unité d'accumulation et de consommation (E1) comprend un compteur de courant (Z1) pour la mesure de la quantité de courant prélevée de la station de recharge (T1) ou émise vers la station de recharge (T1).

5. Procédé selon l'une des revendications précédentes, **caractérisé en ce que**
- la première liaison de communication (K1) s'effectue par câble, plus particulièrement par l'intermédiaire du câble de charge ou par l'intermédiaire d'un câble de données séparé ou a lieu par radio (F1), plus particulièrement WLAN, Zigbee, Bluetooth, technologie transpondeur ou RFID ; et/ou
- la deuxième liaison de communication (K2) entre la station de recharge (T1) et le serveur de facturation (D1) et/ou la liaison de communication supplémentaire (K4) s'effectuent par câble, de préférence par DSL, ISDN, téléphone fixe ou powerline ou a lieu par radio (F2) ; ou
- la deuxième liaison de communication (K2) et/ou la liaison de communication supplémentaire (K4) s'effectue par radio (F2, F3, F4), de préférence GSM, GPRS, UMTS, WiMAX, radioguidage ou téléavertissement.

6. Procédé selon l'une des revendications précédentes, **caractérisé en ce que**, à l'aide d'un système de localisation (01) monté sur l'unité d'accumulation et de consommation (E1), des données concernant le lieu de séjour sont transmises par radio à une station de recharge (T1) ou directement au serveur de facturation (D1).

7. Procédé selon l'une des revendications précédentes, **caractérisé en ce que**, sur le serveur de facturation (D1), sont enregistrées en outre des données concernant au moins un exploitant de réseau de transmission (01) et/ou des données concernant au moins un exploitant de réseau de distribution d'électricité (V1) et/ou des données concernant au moins un fournisseur de client (L2).

8. Procédé selon l'une des revendications précédentes, **caractérisé en ce que** l'achat de courant et l'alimentation en courant est réalisé de manière contrôlée dans le temps et/ou au niveau du prix et/ou sur la base de stratégies pour l'optimisation de la stabilité du réseau de l'exploitant de réseau de distribution d'électricité (V1), par une ou plusieurs unités d'accumulation et de consommation (E1) au niveau d'une des stations de recharge (T1 - Tn).

9. Procédé selon l'une des revendications précédentes, **caractérisé en ce que**, par l'intermédiaire de la première et/ou de la deuxième liaison de communication et/ou de la liaison de communication supplémentaire (K1, K2, K4), des données de transactions sont transmises, qui concernent de préférence une quantité d'énergie ou une puissance demandée ou proposée par le client, dans lequel les données de transactions sont de préférence des prix de l'électricité, des limites supérieures et inférieures du prix de l'électricité ou des quantités de courant, à chacun desquels peuvent correspondre un moment ou une période déterminée.

10. Procédé selon la revendication 9, **caractérisé en ce que** les données de transactions du client sont harmonisées avec les données de transaction correspondantes du fournisseur d'énergie et les quantités d'énergie, le temps et les puissances pour les actions d'achat d'énergie et les actions de vente d'énergie entre le client et le fournisseur d'énergie sont déterminés, dans lequel les données de transactions peuvent être saisies de préférence par l'intermédiaire d'un appareil d'entrée dans le véhicule, de manière mobile ou au niveau de la station de recharge et peuvent être affichées par l'intermédiaire d'un écran à la station de recharge.

11. Station de recharge fixe (T1) pour l'achat de courant indépendamment du lieu et/ou pour l'alimentation en courant indépendamment du lieu par une unité d'accumulation et de consommation mobile (E1) au niveau de la station de recharge fixe, dans lequel la station de recharge (T1) est alimentée en courant par des conduites de courant d'au moins un exploitant de réseau de distribution d'électricité (V1) par un fournisseur de stations (L1), avec :
- une première unité de communication pour l'établissement d'une première liaison de communication (K1) pour la transmission d'un premier paquet de données entre l'unité d'accumulation et de consommation (E1) et la station de recharge (T1) lors de l'approche physique de l'unité d'accumulation et de consommation mobile (E1) de la station de recharge fixe (T1), dans lequel, à l'unité d'accumulation et de consommation (E1) est attribué un identifiant unique (ID1) qui permet d'établir une correspondance avec un fournisseur de clients (L2) et la station de recharge (T1) comprend au moins un compteur de courant (Z2) avec un numéro de compteur (ID2) ;
- une deuxième unité de communication pour la transmission d'un deuxième paquet de données contenant au moins l'identifiant (ID1) et le numéro de compteur (ID2), par l'intermédiaire d'une deuxième liaison de communication (K2) entre la station de recharge et un serveur de facturation, dans lequel le serveur de facturation (D1) correspond à un exploitant de station (B1) ;
- une unité de libération de station de recharge pour la libération de la station de recharge (T1) après une attribution réussie et validation par le serveur de facturation de client (D2) ;
- une unité de distribution pour la distribution de courant à l'unité d'accumulation et de consommation (E1) ou alimentation en courant de la station de recharge (T1) par l'unité d'accumulation et de consommation (E1) par l'intermédiaire d'un câble de charge ou par l'intermédiaire d'une transmission de courant sans contact, de préférence inductive ou capacitive ;
- dans lequel la deuxième unité de communication est conçue pour la transmission de la quantité de courant prélevée ou introduite par l'unité d'accumulation et de consommation (E1) dans la station de charge (T1) par l'intermédiaire de la deuxième liaison de communication (K2) au serveur de facturation (D1) ;
dans lequel, entre l'exploitant de station (B1) et le fournisseur de client (L2), il existe un accord d'itinérance (R1) ; et
dans lequel, dans la station de recharge (T1) l'ensemble de la consommation de courant de la station de recharge (T1) est mesurée par l'intermédiaire d'un compteur de courant supplémentaire (Z3).

12. Système pour l'achat d'électricité indépendamment du lieu et/ou d'alimentation en courant indépendamment du lieu d'une unité d'accumulation et de consommation mobile (E1) au niveau d'une station de recharge fixe (T1) d'un exploitant de station (B1) quelconque, dans lequel une pluralité de stations de recharge (T1 - Tn) sont alimentées en courant par des conduites de courant d'au moins un exploitant de réseau de distribution d'électricité (V1) par un fournisseur de stations (L1), ce système comprenant :
- une station de recharge fixe selon la revendication 11 ;
- un serveur de facturation (D1) qui correspond à un exploitant de station (B1), avec :
i. une unité de réception pour la réception du deuxième paquet de données et de la quantité de courant prélevée ou alimentée par l'unité d'accumulation et de consommation (E1) à la station de recharge (T1) par l'intermédiaire de la deuxième liaison de communication (K2) ;
ii. une unité d'attribution pour l'attribution de l'unité d'accumulation et de consommation (E1) au fournisseur de client (L2) à l'aide du premier paquet de données transmis par l'unité d'accumulation et de consommation mobile ; et
iii. une unité de transmission pour la transmission d'un troisième paquet par l'intermédiaire de la liaison de communication supplémentaire (K4) ; et
- un serveur de facturation de client, dans lequel l'unité d'accumulation et de consommation est enregistrée, avec une unité de communication pour la réception du troisième paquet de données provenant du serveur de facturation.
